# EUROPÄISCHE PATENTSCHRIFT

(11) **EP 1 127 249 B1**
(45) Veröffentlichungstag und Bekanntmachung des Hinweises auf die Patenterteilung: **17.05.2017**
(21) Anmeldenummer: 00965817.0
(22) Anmeldetag: 05.09.2000
(51) Int. Cl.: G01F 1/684, G01F 15/12

(54) **VORRICHTUNG ZUR MESSUNG VON ZUMINDEST EINEM PARAMETER EINES IN EINER LEITUNG STRÖMENDEN MEDIUMS**
DEVICE FOR MEASURING AT LEAST ONE PARAMETER OF A MEDIUM FLOWING IN A PIPE
DISPOSITIF DE MESURE D'AU MOINS UN PARAMETRE D'UN AGENT S'ECOULANT DANS UNE CONDUITE

(30) Priorität: 07.09.1999 DE 19942502
(43) Veröffentlichungstag der Anmeldung: 29.08.2001
(73) Patentinhaber: ROBERT BOSCH GMBH, 70442 Stuttgart (DE)
(72) Erfinder: LENZING, Thomas, 71726 Benningen (DE); REYMANN, Klaus, 70839 Gerlingen (DE); TANK, Dieter, 70806 Kornwestheim (DE); KONZELMANN, Uwe, 71679 Asperg (DE); GUENTHER, Waldemar, 74321 Bietigheim-Bissingen (DE); KUBITZ, Horst, 71711 Steinheim (DE)
(86) Internationale Anmeldenummer: PCT/DE2000/003050
(87) Internationale Veröffentlichungsnummer: WO 2001/018499

(56) Entgegenhaltungen:
- EP-A- 0 173 461
- EP-A- 0 708 315
- DE-A- 19 652 753
- DE-A- 19 735 664
- FR-A- 2 408 121
- US-A- 4 433 576

## Beschreibung

### Stand der Technik

Die Erfindung geht aus von einer Vorrichtung zur Messung von zumindest einem Parameter eines in einer Leitung strömenden Mediums nach der Gattung des Anspruchs 1.

Aus der DE 197 35 891 A1 ist ein in einen Reinkanal einer Ansaugleitung einer Brennkraftmaschine einsetzbarer Meßkörper zur Messung der Masse der Ansaugluft bekannt, der einen Strömungs- und Meßkanal aufweist, der im wesentlichen zu einer Längsachse einer Leitung geneigt ist und sich in einen daran anschließenden, S-förmigen Umlenkkanal gliedert. Ein Meßelement ist in dem Meßkanal angeordnet. Das Meßelement kann, wie beispielsweise durch die DE 43 38 891 A1 bzw. US-PS 5,452,610 bekannt ist, als mikromechanisches Sensorteil mit einer dielektrischen Membran ausgebildet sein. Infolge Wassereintrag in die Ansaugleitung, z.B. durch regennasse Fahrbahn, kann es ggf. zu einer Kontamination des Meßelements kommen. In diesem Spritzwasser enthaltene natürliche Anteile an gelösten Salzen rufen dann einen Kennliniendrift infolge Salzkrustenaufbau auf der Membran des Sensorteils hervor. Durch die Neigung des Meßkörpers wird zwar ein abgeschatteter Bereich gebildet, aber Schmutz- oder Flüssigkeitspartikel gelangen trotzdem in den Meßkanal.

Aus der DE 197 35 664 A1 ist schon eine Vorrichtung bekannt, bei der das Meßelement innerhalb eines von dem Medium durchströmten Rohrkörpers angeordnet ist, wobei sich ein strömungsaufwärtiges Ende des Rohrkörpers bis in eine Filterkammer erstreckt und dort an einer Mantelfläche Einlaßöffnungen aufweist, um eine Beaufschlagung des Meßelementes durch Schmutzpartikel oder Wassertröpfchen zu vermindern. Besonders bei stark verschmutzter Luft und einem hohen Wasseranteil in der Ansaugluft der Brennkraftmaschine besteht die Gefahr, daß sich der Luftfilter mit Wasser vollsaugt, das dann durch die Filtermatte hindurchtritt und dabei Schmutzpartikel mitnimmt. Auf der strömungsabwärtigen Seite des Luftfilters, der eigentlichen Reinseite, besteht nun die Gefahr, daß die Ansaugluft wieder von der Filteroberfläche Schmutzpartikel und Wassertröpfchen mitreißt, die dann in unerwünschter Weise an dem Meßelement angelagert werden und zu Fehlmessungen oder einem Ausfall des Meßelementes führen. Der Rohrkörper nach dem Stand der Technik vermindert durch die Anordnung der Einlaßöffnungen an der Mantelfläche die Gefahr von Ablagerungen am Meßelement, jedoch wird durch eine entsprechend lange Ausbildung des Rohrkörpers ein unerwünschter Druckabfall bewirkt, der zu einer Verminderung der Meßempfindlichkeit führt. Außerdem ist die Verringerung einer Beaufschlagung des Meßelements mit Flüssigkeit/Festkörperpartikeln zu gering, um die Anforderungen von einem Flüssigkeitseintrag von 20 Liter/Stunde zu gewährleisten.

Es ist weiterhin vorgeschlagen worden, ein Abweisgitter in einer Leitung zu verwenden, um aus strömender Luft oder einem Gas Flüssigkeitspartikel zu trennen. Ein solches vor einem Innenrohr oder in der Leitung geschaltetes Abweisgitter beeinflußt das dem Meßelement zuströmende Luft/Wassergemisch derart, daß die Flüssigkeitspartikel an eine Rohrwand bzw. eine Leitungswand geleitet werden, während die Luft in einem Zentrum des Innenrohres verbleibt. Jedoch wird durch diese Phasenseparation jetzt unmittelbar hinter dem Abweisgitter ein sehr großes instationäres Totwassergebiet erzeugt, welches sich über die Betriebszeit mit Wasser anreichert und dieses dann unkontrolliert in Richtung des Meßkörpers abströmen läßt. Außerdem gelangen auch unwillkürlich Luftwirbel des Totwassergebiets zum Meßkörper und stören so die Reproduzierbarkeit des Sensorsignals.

Aus der DE 196 52 753 A1 ist eine Vorrichtung mit einem Meßelement bekannt, die einen Strömungsgleichrichter und ein Gitter zu einer Stabilisierung eines Meßsignals enthält. Jedoch wird kein weiteres Gitter oder Element verwendet, um das Meßelement vor Flüssigkeiten oder Festkörperpartikeln zu schützen.
Aus der DE 196 47 081 A1 bzw. US-PS 5,918,279 ist ein Gitter bekannt, das bereichsweise Gitteröffnungen mit unterschiedlichen Querschnitten hat. Jedoch sind dort keine Maßnahmen zur Vermeidung einer Verschmutzung des Meßelements mit Wasser und/oder Festkörperpartikeln vorgesehen.

Aus der US 4 433 576 ist eine Vorrichtung zur Messung der Luftmasse mit einem Strömungsgleichrichter bekannt, der so ausgebildet ist, dass er den Luftstrom inklusive aller darin enthaltenen Schmutzpartikel und Flüssigkeitströpfchen immer direkt auf das Messelement richtet

Aus der EP 0 708 315 A2 ist eine Vorrichtung zur Messung der Luftmasse bekannt, die stromaufwärts des Messelementes einen Filterkasten mit einem Filter aufweist. Auf der strömungsabwärtigen Seite des Filters kann die Ansaugluft von der Filteroberfläche Wassertröpfchen und Schmutzpartikel mitreißen, die dann zu dem Messelement gelangen.

Die EP 0 173 461 A1 zeigt eine Vorrichtung zur Messung eines Luftmassenstromes, die stromaufwärts eines Messelementes einen Stömungsgleichrichter aufweist, der die Strömung mitsamt den darin enthaltenden Schmutzpartikeln und Wassertröpfchen direkt auf das Messelement richtet.

Aus der FR 78 25199 ist eine Vorrichtung zur Messung der Luftmasse bekannt, bei der ein Schutzelement stromaufwärts vor einem temperaturabhängigen Widerstand angeordnet ist. Das Schutzelement dient als Berührungs- und Flammenschutz und zur Strömungsgleichrichtung.

Aus der DE 197 35 664 A1 ist eine Vorrichtung zur Messung der Luftmasse bekannt, die eine Filterkammer mit einem darin angeordneten Filterelement aufweist, das stromaufwärts eines Messelementes angeordnet ist. Auf der strömungsabwärtigen Seite des Filterelementes kann die Luftströmung Wassertröpfchen und Schmutzpartikel mitreißen, die dann ungehindert zu dem Messelement gelangen.

### Vorteile der Erfindung

Die erfindungsgemäße Vorrichtung mit den kennzeichnenden Merkmalen des Anspruchs 1 hat demgegenüber den Vorteil, daß auf einfache Art und Weise eine Verbesserung der Meßergebnisse erzielt wird, in dem Flüssigkeiten und/oder Festkörperpartikel durch ein Schutzgitter um ein Meßelement gelenkt werden.

Durch die in den abhängigen Ansprüchen aufgeführten Maßnahmen sind vorteilhafte Weiterbildungen und Verbesserungen der im Anspruch 1 genannten Vorrichtung möglich.

Besonders vorteilhaft ist es, die Ausbildung eines Totwassergebiets und Wirbelgebiets durch ein Mittel strömungsabwärts des Schutzgitters oder in dem Schutzgitter zu reduzieren.

Eine vorteilhafte Ausbildung zur Reduzierung eines Totwassergebiets sind Längsrippen, die sich im Bereich des Totwassergebiets axial erstrecken und in Hauptströmungsrichtung dicker werden. Dadurch wird eine größere Wandfläche und Reibung erzeugt, so daß eine Strömungsgeschwindigkeit im Totwassergebiet reduziert und somit das Totwassergebiet deutlich verkleinert wird. Dies führt zu einem zeitlich konstanten Verhalten und einem reduzierten Signalrauschen eines Meßelements.

Vorteilhaft ist es auch, das im Totwassergebiet enthaltene Wasser aus diesem abzusaugen. Dies geschieht durch zumindest eine in den Rohrkörper im Bereich des Totwassergebiets eingebrachte Absaugöffnung. Eine Beschleunigung der Strömung im Bereich der Absaugöffnungen wird durch Erhebungen erzeugt.

Vorteilhaft ist es, das Schutzgitter als Turbulator auszuformen, um eine Wasseransammlung in dem Totwassergebiet zu verringern, weil der Strömung ein Drall aufgezwungen wird, der das Wasser stärker an eine Innenwand der Leitung oder des Rohrkörpers drängt.

Für eine integrale Lösung ist es vorteilhaft, das Schutzgitter, als Turbulator, in einer Aussparung des Meßkörpers unterzubringen, wobei auch in einem Meßkanal des Meßkörpers Längsrippen und Absaugöffnungen vorhanden sein können.

Weiterhin ist es vorteilhaft, einen Rohrkörper in einer Leitung zu verwenden, in dem sich ein Meßkörper befindet, da bereits durch den Rohrkörper eine Reduzierung der Verschmutzung durch Festkörper- und Flüssigkeitspartikel stattfindet.

Es ist auch vorteilhaft , das Schutzgitter in den Rohrkörper einzubringen, was zu einer weiteren deutlichen Reduzierung der Verschmutzung durch Festkörper- und Flüssigkeitspartikel dadurch führt, daß das strömende Medium umgelenkt wird.

Eine Möglichkeit, um Schmutzpartikel und Flüssigkeitströpfchen in einer gewünschten Richtung umzuleiten ergibt, sich in vorteilhafter Weise dann, wenn das Schutzgitter in Strömungsrichtung geneigt verläuft.

Zur Reduzierung von Teilen und des Fertigungsaufwandes ist es vorteilhaft, das Schutzgitter in einen strömungsaufwärts des Meßkörpers gelegenen Strömungsgleichrichter zu integrieren.

### Zeichnung

Mehrere Ausführungsbeispiele der Erfindung sind in der Zeichnung vereinfacht dargestellt und in der nachfolgenden Beschreibung näher erläutert.

Es zeigen
Figur 1 ein Beispiel einer erfindungsgemäßen Vorrichtung mit einem Rohrkörper und Längsrippen,
Figur 2 einen axialen Querschnitt in Längsrichtung in Figur 1,
Figur 3 eine Draufsicht von Figur 1 in Hauptströmungsrichtung,
Figur 4 ein weiteres Beispiel einer erfindungsgemäßen Vorrichtung mit einem Rohrkörper und einer Absaugöffnung,
Figur 5 einen axialen Querschnitt in Längsrichtung in Figur 4,
Figur 6 eine Draufsicht von Figur 4 in Hauptströmungsrichtung,
Figur 7 ein weiteres erfindungsgemäßes Ausführungsbeispiel einer erfindungsgemäßen Vorrichtung,
Figur 8a,b Anordnungsmöglichkeiten eines Schutzgitters,
Figur 9 eine Integration des Schutzgitters in einen Strömungsgleichrichter,
Figur 10 ein weiteres Ausführungsbeispiel einer erfindungsgemäßen Vorrichtung,
Figur 11a, b einen Meßkörper mit dem Schutzgitter.

### Beschreibung der Ausführungsbeispiele

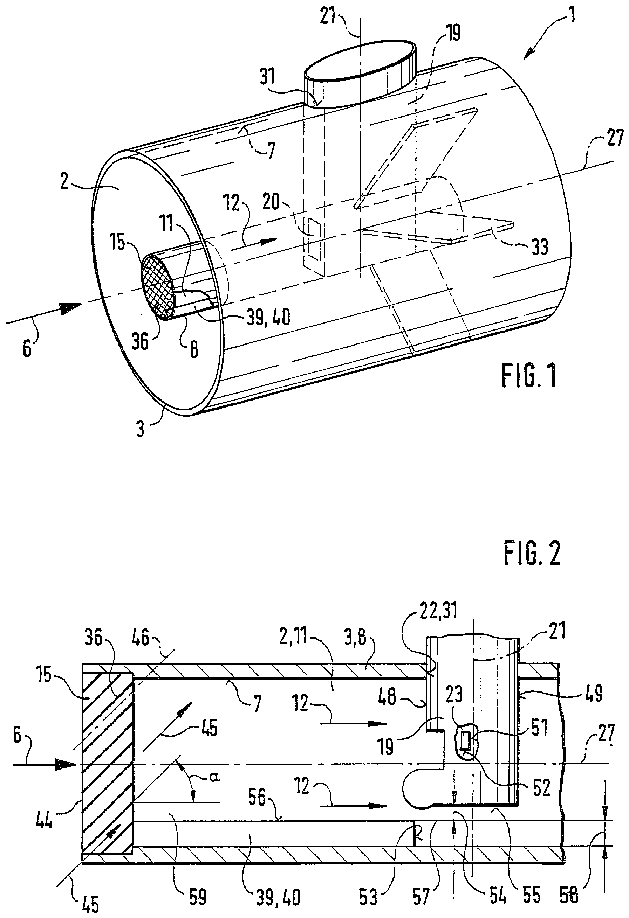

Figur 1 zeigt eine Vorrichtung 1 zur Messung von zumindest einem Parameter, insbesondere des Luftmassenstroms, eines in einer Leitung 2 strömenden Mediums, insbesondere der Ansaugluftmasse einer Brennkraftmaschine. Parameter eines strömenden Mediums sind bspw. der Luftmassenstrom zur Ermittlung einer Luftmasse, eine Temperatur, ein Druck oder eine Strömungsgeschwindigkeit, die mittels geeigneter Sensoren bestimmt werden. Die Anwendung der Vorrichtung 1 für Messungen weiterer Parameter ist möglich. Die Leitung 2 hat eine Wandung 3. In der Leitung 2 strömt das Medium in Hauptströmungsrichtung 6, gekennzeichnet durch einen Pfeil. Die Leitung 2 hat eine Innenwandung 7. In der Leitung 2 ist bspw. ein mit radialem Abstand zur Leitung 2 verlaufender und von dem Medium umströmter Rohrkörper 8 vorhanden. Der Rohrkörper 8 hat einen Durchströmungskanal 11 und im Bereich seines strömungsaufwärtigen Ende gelegen ein Schutzgitter 15. Das Schutzgitter 15 kann bspw. als Drahtgeflecht oder plattenförmiges Gitter ausgebildet sein. Jede andere Form ist auch möglich. Als Material für das Schutzgitter 15 kann sowohl für das Drahtgeflecht, als auch für das plattenförmiges Schutzgitter 15 Kunststoff, Metall, Keramik oder Glas verwendet werden. Das plattenförmige Schutzgitter 15 aus Kunststoff kann beispielsweise durch Spritzgießen hergestellt werden oder durch Einbringen der Gitteröffnungen 44 mittels eines materialabtragenden Verfahrens. Das plattenförmige Gittersieb 15 aus Metall kann beispielsweise aus Blech durch Stanzen, Erodieren, Bohren usw. hergestellt werden.
In dem Durchströmungskanal 11 herrscht strömungsabwärts etwas entfernt von dem Schutzgitter 15 eine Strömungsrichtung 12. Die Strömungsrichtung 12 verläuft in etwa parallel zur Hauptströmungsrichtung 6. Die Leitung 2 hat eine Mittellinie 27, die bspw. auch die Mittellinie des Rohrkörpers 8 ist.
In den Rohrkörper 8 erstreckt sich bspw. ein Meßkörper 19. Der Meßkörper 19 kann bspw. ein Temperatursensor, wie er aus der DE 42 28 484 C2 bekannt ist, ein Drucksensor, wie er in der DE 31 35 794 A1 verwendet wird, oder ein Luftmassensensor sein, der die entsprechenden Parameter ermittelt. Als Beispiel für die verschiedenen Sensoren wird hier exemplarisch ein Luftmassensensor gewählt, der bspw. in einem Meßkörper 19 angeordnet ist und der bspw. eine Einlaßöffnung 20 hat, in die das Medium einströmt.
Dem Fachmann ist ein solcher Meßkörper 19 aus der DE 197 35 891 A1 bekannt, die Teil dieser Offenbarung sein soll.
Die von der Brennkraftmaschine angesaugte Luftmasse ist durch eine nicht dargestellte, strömungsabwärts des Rohrkörpers 8 in dem Ansaugrohr der Brennkraftmaschine angeordnete Drosselklappe willkürlich veränderbar.
Zur Ermittlung der Ansaugluftmasse der Brennkraftmaschine ist der Meßkörper 19 vorgesehen, der im wesentlichen länglich und quaderförmig ausgebildet ist und sich entlang einer Längsachse 21 erstreckt. Die Längsachse 21 verläuft im wesentlichen senkrecht zur Mittellinie 27 und damit auch zur Hauptströmungsrichtung 6. Der Meßkörper 19 ist teilweise durch eine Einstecköffnung 31 in der Wandung 3 und eine Einstecköffnung 22 in einer Wandung des Rohrkörpers 8 bspw. eingesteckt und ragt mit einem freien Ende in den Durchströmkanal 11. Ein die elektrischen Anschlüsse, beispielsweise in Form von Steckerzungen, aufnehmendes Steckerende des Meßkörpers 19 verbleibt dabei bspw. außerhalb der Leitung 2. Im Meßkörper 19 ist in bekannter Weise ein Meßelement 23 vorgesehen, das mit der den Durchströmkanal 11 durchströmenden Luft in Kontakt steht und mittels dem die von der Brennkraftmaschine angesaugte Luftmasse bestimmt wird. Das Meßelement 23 kann in bekannter Weise z.B. in Form von wenigstens einem temperaturabhängigen Widerstand ausgebildet sein. Insbesondere ist es möglich, wie beispielsweise in der DE 43 38 891 A1 bzw. US-PS 5,452,610 gezeigt wird, das Meßelement 23 als mikromechanisches Bauteil auszubilden, welches eine dielektrische Membran aufweist, auf welcher Widerstandselemente ausgebildet sind. Es ist auch denkbar, das Meßelement 23 ohne Meßkörper in die Leitung 2 oder den Rohrkörper 8 einzubringen.

An dem Rohrkörper 8 befinden sich bspw. wenigstens zwei Streben 33, die zur Halterung des Rohrkörpers 8 in der Leitung 2 dienen. Die Streben 33 bewirken außer der Halterung des Rohrkörpers 8 in der Luftströmung zwischen der Leitung 2 und dem Rohrkörper 8 eine Erhöhung des Druckabfalls, so daß sich die durch den Durchströmkanal 11 strömende Luftmenge erhöht, und zum anderen bewirken die Streben 33 in gewollter Weise eine Gleichrichtung der Ansaugluftströmung. Der Rohrkörper 8 kann auch ohne Streben 33 in der Leitung 2 angeordnet sein, bspw. ist er an dem Meßkörper 19 befestigt.

Das Schutzgitter 15 besteht bspw. aus senkrecht zueinander ausgebildeten Stege 36 bspw. senkrecht zur Längsachse 21 und parallel zur Längsachse 21, wobei die zur Längsachse 21 senkrechten Stege 36 bspw. um einen Winkel von etwa 30° angestellt sind. Hierdurch wird die Hauptströmungsrichtung 6 strömungsabwärts hinter dem Schutzgitter 15 verändert. Das Schutzgitter 15 kann auch gegenüber der Hauptströmungsrichtung 6 geneigt verlaufen. An dem Schutzgitter 15 lagern sich Schmutzpartikel und Flüssigkeitströpfchen ab und werden an eine Innenwand 7 der Leitung 2 oder des Rohrkörpers 8 geleitet und bewegen sich dadurch an der Einlaßöffnung 20 des Meßkörpers 19 oder an dem Meßelement 23 vorbei.

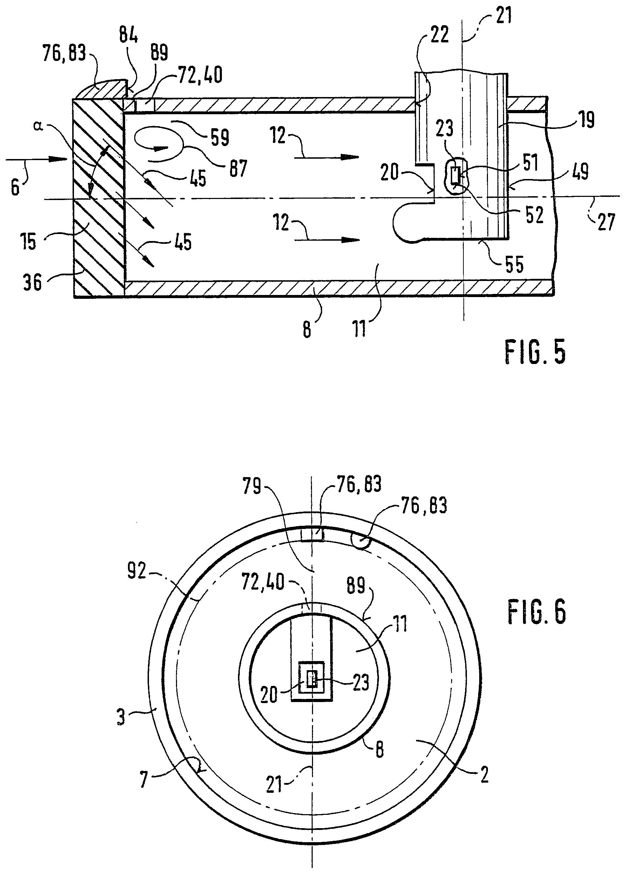

Weiter strömungsabwärts des Schutzgitters 15 herrscht eine Strömungsrichtung 12 in dem Durchströmkanal 11, die nahezu parallel zur Mittellinie des Rohrkörpers 8 ist. Strömungsabwärts hinter dem Schutzgitter 15 wird, wie in Figur 2 dargestellt, ein abgeschatteter Bereich 59 erzeugt, welcher sich über eine längere Betriebszeit der Vorrichtung 1 mit Flüssigkeit anreichern kann. Diese Flüssigkeit strömt dann irgendwann unkontrolliert in Richtung des Meßkörpers 19 oder des Meßelements 23. Außerdem gelangen auch Luftwirbel 87 (Fig. 5) des abgeschatteten Bereichs 59 in die Einlaßöffnung 20 und stören so die Reproduzierbarkeit eines Sensorsignals.

In dem Rohrkörper 8 ist bspw. zumindest eine bspw. in Richtung der Mittellinie verlaufende Längsrippe 39 angeordnet. Die dem Schutzgitter 15 bspw. direkt nachfolgenden Längsrippen 39, als ein Mittel 40 zur Reduzierung von Wirbeln 87 (Fig. 5) und unkontrollierbarer Flüssigkeitsansammlungen, sind über den Umfang des Rohrkörpers 8 verteilt.

Figur 2 zeigt einen axialen Querschnitt in Längsrichtung in Figur 1. Für gleiche oder gleichwirkende Teile werden die gleichen Bezugszeichen wie in Figur 1 verwendet.
Zu erkennen ist das Schutzgitter 15 mit Stegen 36, die um einen bestimmten Umlenkwinkel α zur Mittellinie 27 geneigt verlaufen. Die Stege 36 bilden Schutzgitteröffnungen 44, die eine Längsachse 46 haben.
Das Medium strömt durch die Schutzgitteröffnungen 44 umgelenkt strömungsabwärts gesehen hinter dem Schutzgitter 15 in einer anderen Richtung 45, gekennzeichnet durch einen Pfeil. Die Richtung 45 schließt mit der Hauptströmungsrichtung 6 ungefähr den Umlenkwinkel α ein.
Es kann bspw. auch kein Rohrkörper 8 vorhanden sein, so daß sich das Schutzgitter 15 bspw. über den ganzen Querschnitt der Leitung 2 erstreckt und die zumindest eine Längsrippe 39 ist an der Innenwandung 7 der Leitung 2 angeordnet.
Die zumindest eine Längsrippe 39 schließt sich bspw. direkt an das Schutzgitter 15 an.
Der Meßkörper 19 hat eine Vorderfläche 48, die zuerst von dem Medium angeströmt und umströmt wird. Eine Unterfläche 55 wird durch das freie radiale Ende des Meßkörpers 19 gebildet. Die zumindest eine Längsrippe 39 erstreckt sich hier bspw. bis zu der Vorderfläche 48 des Meßkörpers 19. Sie kann sich aber auch bis zu einer Hinterfläche 49, die der Vorderfläche 48 des Meßkörpers 19 strömungsabwärts gegenüberliegt, erstrecken. Statt der Vorderfläche 48 bzw. Hinterfläche 49 bzw. Unterfläche 55 des Meßkörpers 19 kann es sich auch um eine Vorderfläche 50 bzw. Hinterfläche 51 bzw. Unterfläche 52 des Meßelements 23 handeln. Eine radiale Höhe 58 der zumindest einen Längsrippe 39 hat hier bspw. eine gleich Höhe. Die Längsrippe 39 erstreckt sich in radialer Richtung höchstens soweit, daß eine ein radiales Ende 56 der Längsrippe 39 tangierende Linie 57 höchstens eine Unterfläche 55 des Meßkörpers 19 berührt.
Man kann sich auch vorstellen, daß die radiale Höhe 58 vom Schutzgitter 15 an beginnend größer oder kleiner wird, bzw. jeden anderen Verlauf nimmt.
Ist die radiale Höhe 58 der Längsrippe 39 unterschiedlich hoch, so
hat die Längsrippe 39 an ihrem strömungsabwärtigen Ende 53 von dem freien radialen Ende aus gesehen einen radialen Abstand 54 zur Unterfläche 55 des Meßkörpers 19, der null oder größer null ist.
Hinter dem Schutzgitter 15 befindet sich der abgeschattete Bereich 59. Dieser liegt etwa in dem Bereich, der von dem Medium, das in die Richtung 45 strömt, nicht unmittelbar durchströmt wird. Dort bildet sich ein sogenanntes Totwassergebiet, in dem sich Wasser an der Oberfläche des Schutzgitters ansammelt und unkontrollierbare Wirbel 87 (Fig. 5) bilden.
Der Abbau der Flüssigkeitsansammlungen und der Wirbel 87 sowie die Ausbildung eines zeitlich konstanten Strömungsverhaltens derselben wird infolge der mittels der zumindest einen Längsrippe 39 zusätzlich der Strömung zur Verfügung gestellten Wandfläche 60 und somit einer erhöhten Wandhaftung und reduzierten Strömungsgeschwindigkeit bewirkt. Dabei stört die zumindest eine Längsrippe 39 weder die Flüssigkeitsabweisung, da diese in Strömungsrichtung keine geometrischen Unebenheiten aufweisen und somit den sich einstellenden Wandfilm der Flüssigkeit nicht verändern, noch reduziert sie den freien Strömungsquerschnitt nennenswert, so daß kaum ein Druckabfall stattfindet.

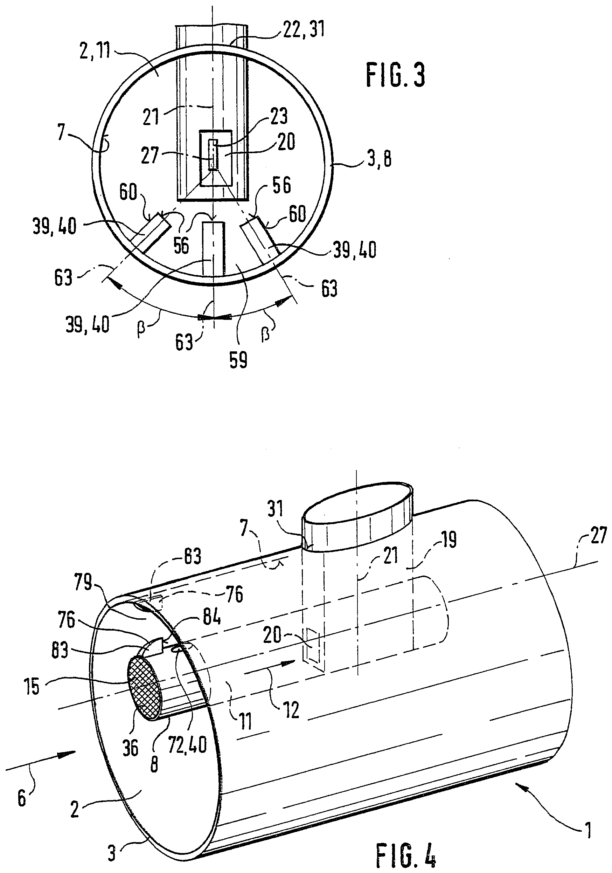

Figur 3 zeigt eine Draufsicht von Figur 1 in Hauptströmungsrichtung 6. Für gleiche oder gleichwirkende Teile werden die gleichen Bezugszeichen wie in den bisherigen Figuren verwendet.
Auch hier gilt wie bei den Erläuterungen zu Figur 2: die zumindest eine Längsrippe 39 ist in der Leitung 2 oder in dem Durchströmungskanal 11 angeordnet.
Die bspw. drei Längsrippen 39 haben Rippenmittellinien 63, die bspw. auf einen Mittelpunkt, also einen Durchstoßpunkt der Längsachse 27 in der Zeichnungsebene ausgerichtet sind. Die Rippenmittellinien 63 schneiden die Mittellinie 27. Die zumindest eine Längsrippe 39 ist also radial ausgerichtet. Die Rippenmittellinien 63 von direkt benachbarten Längsrippen 39 schließen bspw. einen gleichen Schnittwinkel β zueinander ein. Ein gleicher Schnittwinkel β ist aber nicht notwendig. Die zumindest eine Längsrippe 39 kann beliebig entlang einer Innenwandung der Leitung 2 oder des Rohrkörpers 8 angeordnet sein. Vorzugsweise befindet sich die zumindest eine Längsrippe 39 dort, wo der abgeschattete Bereich 59 ist.
Zur weiteren Stabilisierung der Strömung und somit einer Erhöhung der Reproduzierbarkeit des Sensorsignals kann die zumindest eine Längsrippe 39 senkrecht zur Hauptströmungsrichtung 6 breiter und bspw. stromlinienförmig ausgebildet werden, wodurch sie einerseits die Wasserabweisung weiterhin nicht stört aber andererseits eine größere Querschnittsfläche versperrt und somit die Strömung beschleunigt. Eine Querschnittskontur der zumindest einen Längsrippe 39 kann eckig, kurvenförmig oder rund sein. Ein radiales Ende 56 der zumindest einen Längsrippe 39 kann rund oder eben sein.

Figur 4 zeigt ein weiteres Beispiel der erfindungsgemäßen Vorrichtung 1 mit einem Rohrkörper 8 und einer Absaugöffnung 72, als ein Mittel 40 zur Reduzierung von Wirbeln 87 (Fig. 5) und unkontrollierbarer Flüssigkeitsansammlungen. Für gleiche oder gleichwirkende Teile werden die gleichen Bezugszeichen wie in den bisherigen Figuren verwendet.
Auf dem Rohrkörper 8 ist zumindest eine Absaugöffnung 72 eingebracht, die sich in Hauptströmungsrichtung 6 gesehen strömungsabwärts hinter dem Schutzgitter 15 befindet. Ein oder bspw. mehrere Öffnungen 72 können an jeder Stelle des Rohrkörpers 8 vorhanden sein. Die zumindest eine Absaugöffnung 72 kann in jeder beliebigen Form (rund, eckig oder oval) ausgeführt sein, sollte aber einen Durchmesser von 3mm oder einen entsprechenden Querschnitt nicht überschreiten. Die Absaugöffnung 72 stellt eine Verbindung zwischen der Leitung 2 und dem abgeschatteten Bereich 59 her.
Strömungsaufwärts vor der zumindest einen Absaugöffnung 72 befindet sich ein Mittel 76 zur Erhöhung einer Strömungsgeschwindigkeit. Dieses Mittel wird bspw. durch Erhebungen 83 an einer der Innenwandung 7 der Leitung 2 zugewandten Außenseite des Rohrkörpers 8 und/oder bspw. dazu ausgerichtet auf der gegenüberliegenden Innenwandung 7 der Leitung 2 gebildet. Bspw. sind die Erhebungen 83 gerundet und gleichen im Querschnitt etwa einem Viertelkreis, dessen scharfe Hinterkante 84 unmittelbar vor der zumindest einen Absaugöffnung 72 endet. Jede andere Form, die eine Beschleunigung der Strömung im Bereich der Absaugöffnung 72 bewirkt, ist denkbar. Die Erhebungen 83 bilden so im Verlauf der Hauptströmungsrichtung 6 einen lokal konvergenten Kanal 79.

Figur 5 zeigt einen axialen Querschnitt in Längsrichtung in Figur 4. Für gleiche oder gleichwirkende Teile werden die gleichen Bezugszeichen wie in den bisherigen Figuren verwendet. Die Pfeile 45 deuten an, in welcher Richtung sich das Medium, das durch das Schutzgitter 15 hindurchtritt, bei Austritt aus dem Schutzgitter 15 bewegt. Zwangsläufig richtet sich dann eine Strömungsrichtung des Mediums wieder schnell zur Mittellinie 27 des Rohrkörpers 8 aus. Dadurch entsteht ein abgeschatteter Bereich 59, in dem sich Flüssigkeit, wie z.B. Wasser, ansammelt und sich unkontrolliert Wirbel 87 bilden. Die zumindest eine Absaugöffnung 72 ist vorzugsweise in der Nähe des abgeschatteten Bereichs 59 angebracht. Ein maximaler Abstand der zumindest einen Absaugöffnung 72 zum Schutzgitter 15 hängt von dem Umlenkwinkel α ab. Je größer der Umlenkwinkel α ist, desto kleiner sollte der maximale Abstand sein.
Ein Absaugen des Wassers durch die zumindest eine Absaugöffnung 72 wird durch ein Druckgefälle zwischen Durchströmkanal 11 und Leitung 2 ermöglicht. Hierzu ist es erforderlich, ein solches Druckgefälle zu erzeugen. Dies geschieht bspw. mittels Erhöhung der Strömungsgeschwindigkeit an der der Leitung 2 zugewandten Seite des Rohrkörpers 8 lokal in der Nähe der zumindest einen Absaugöffnung 72 infolge Beschleunigung der Strömung in axialer Richtung durch den konvergenten Kanal 79. Der Abbau der störenden Flüssigkeitsansammlung im abgeschatteten Bereich 59 und die Verhinderung des unkontrollierten Abströmens der Flüssigkeit in Richtung der Einlaßöffnung 20 geschieht dadurch, daß die sich im Bereich der Absaugöffnung 72 ansonsten sammelnde Flüssigkeit generell nicht weiter in den Rohrkörper 8 hinein gelangt.

Figur 6 zeigt eine Draufsicht von Figur 4 in Hauptströmungsrichtung 6. Für gleiche oder gleichwirkende Teil werden die gleichen Bezugszeichen wie in den bisherigen Figuren verwendet.
Die Erhebung 83 kann auch nur an der Innenwandung der Leitung 2 oder nur an einer Außenwandung 89 des Rohrkörpers 8 ausgebildet sein oder an der Außenwandung 89 und der Innenwandung 7 der Leitung 2. Die Erhebung 83 kann lokal im Bereich einer Absaugöffnung 72 ausgebildet sein oder, wie es die gestrichelt gezeichnete Linie 92 zeigt, auch um die ganze Innenwandung der Leitung 2 herum ausgebildet sein. Die Erhebung 83 kann in Hauptströmungsrichtung 6 gesehen, im Querschnitt bspw. eckig oder rund sein.

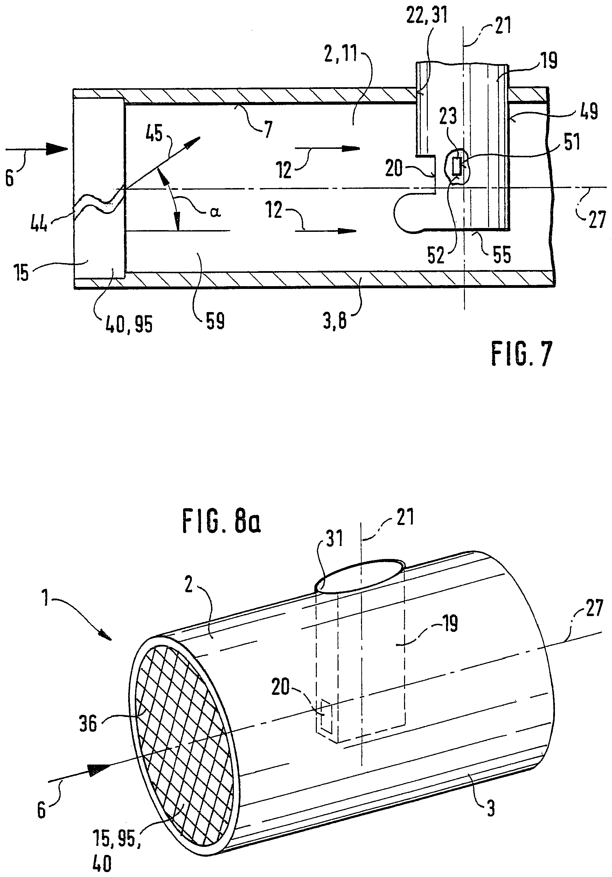

Figur 7 zeigt ein weiteres erfindungsgemäßes Ausführungsbeispiel der Vorrichtung 1. Für gleiche oder gleichwirkende Teile werden die gleichen Bezugszeichen wie in den bisherigen Figuren verwendet.
Das Schutzgitter 15 ist jetzt bspw. als Turbulator 95 ausgebildet und dient so als ein Mittel 40 zur Reduzierung von Wirbeln 87 und unkontrollierbarer Flüssigkeitsansammlungen. Die Gitteröffnungen 44 des Turbulators 95 sind rotationssymmetrisch verdrehte Schaufeln und prägen dadurch der Strömung einen Drall auf. Infolge dieses Dralls wird generell die Strömung im Durchströmkanal 11 stabilisiert, die Flüssigkeitsansammlung im abgeschatteten Bereich 59 deutlich reduziert und somit die Reproduzierbarkeit des Sensorsignals erhöht. Die Aufprägung einer Rotation auf die Strömung bewirkt im Vergleich zu der drallfreien Strömung deutlich erhöhte Fliehkraftanteile, durch die die Flüssigkeit noch stärker an die Innenwandung 7 der Leitung 2 oder des Rohrkörpers 8 gedrängt wird.
Die Herstellung des Turbulators 95 bspw. aus Kunststoff erfolgt identisch zu dem bisherigen Fertigungsprozeß durch Kunststoffspritzen und durch ein Formgebungswerkzeug mit einem Kern. Der Kern bildet das Negativ des Schutzgitters und wird über eine Rotationsbewegung aus dem Formgebungswerkzeug entfernt, so daß in dem verformbaren Kunststoff der Turbulator gebildet wird. Die Rotationsbewegung beim Entfernen des Kerns kann durch die Ankopplung des Kerns an ein Gewinde realisiert werden.

In den Figuren 8a bis 8b sind verschiedene Anordnungsmöglichkeiten des Schutzgitters 15, 95 gezeigt. Für gleiche oder gleichwirkende Teile werden die gleichen Bezugszeichen wie in den bisherigen Figuren verwendet.

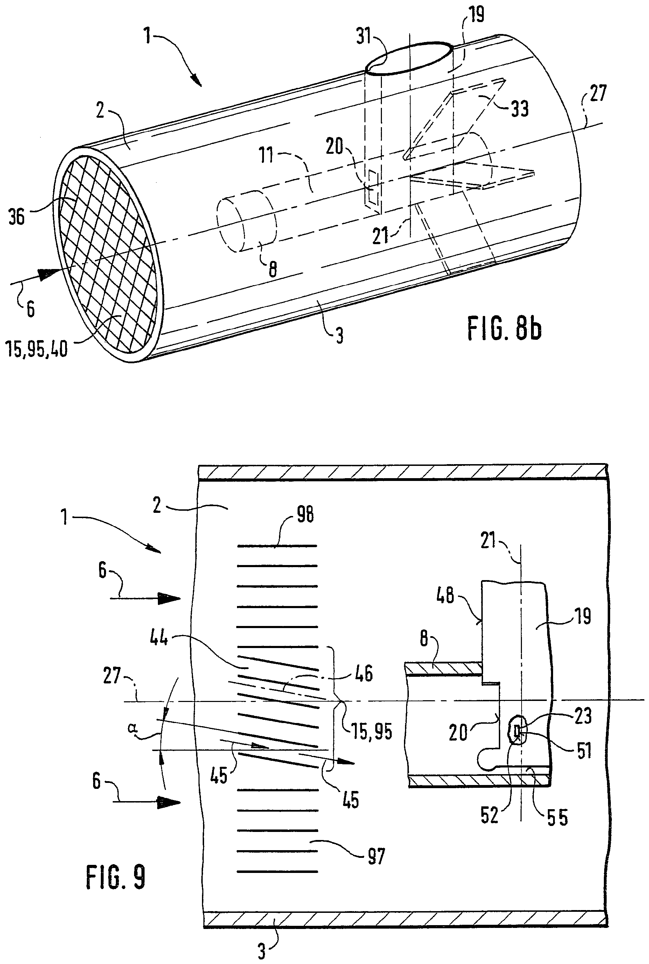

In Figur 8a ist das Schutzgitter 15 bspw. in Form des Turbulators 95 in der Leitung 2 angebracht und erstreckt sich bspw. über den ganzen Querschnitt der Leitung 2. Weiterhin kann man ausgehend von der Ausgestaltung nach Figur 8a den Rohrkörper 8 in der Leitung 2 anbringen, der kein Schutzgitter 95 hat (Fig. 8b). Eine weitere Möglichkeit ist es, das Schutzgitter 95 nur an dem vorhandenen Rohrkörper 8 anzubringen, wie es in Figur 1 schon gezeigt ist. Eine weitere Möglichkeit ist es, von dem Beispiel aus Figur 1 ausgehend bspw. ein zweites Schutzgitter 15, 95 innerhalb der Leitung 2 anzubringen.

Das Schutzgitter 15, 95 oder die Schutzgitter 15, 95 in den Figuren 1-8 lenken die Strömung um einen bestimmten Umlenkwinkel α um. Dabei kann das bspw. plane Schutzgitter 15, 95 senkrecht zur Längsachse 27 stehen und die Gitteröffnungen 44 sind um den Umlenkwinkel α gegenüber der Mittellinie 27 der Leitung 2 geneigt. Es können aber auch die Gitteröffnungen 44 senkrecht zu einer Längsachse des Schutzgitters 15, 95 verlaufen und das Schutzgitter 15, 95 wird unter einem bestimmten Umlenkwinkel α zur Längsachse 27 angeordnet, so daß das strömende Medium ebenfalls umgelenkt wird. Dadurch werden Schmutzpartikel und Flüssigkeitströpfchen an dem Schutzgitter 15 abgelagert und zu einem strömungsabwärtigen Ende des Schutzgitters geleitet, um an die Innenwand der Leitung 2 oder des Rohrkörpers 8 zu gelangen und an dem Meßelement 23 oder der Einlaßöffnung vorbeigeleitet zu werden.

Es ist auch vorstellbar, daß das Schutzgitter 15, 95 Bereiche hat, die das strömende Medium in unterschiedliche Richtungen, bspw. an die gegenüberliegenden Innenwände der Leitung 2 oder des Rohrkörpers 8, umlenken. Dadurch entstehen zwei verschiedene Strömungsrichtungen strömungsabwärts hinter dem Schutzgitter 15, 95 und zwischen diesen bildet sich ein abgeschatteter Bereich 59. Dieser abgeschattete Bereich 59 kann wiederum durch dort entsprechend angeordnete Längsrippen 39 beeinflußt werden.
Weiterhin muß sich das Schutzgitter 15, 95 nicht über den ganzen Querschnitt der Leitung 2 oder des Rohrkörpers 8 erstrecken.
Zwischen einem strömungsabwärtigen Ende des Schutzgitters 15 und einer Innenwand der Leitung 2 oder des Rohrkörpers 8 kann in radialer Richtung eine offene Abströmöffnung vorgesehen sein, wodurch die vom Schutzgitter 15 abgefangene Flüssigkeit mit evtl. eingelagerten Schmutzpartikeln in einen Wandbereich der Leitung 2 oder des Rohrkörpers 8 gelangt und dort von der strömenden Luft unter Beibehaltung einer Wandhaftung strömungsabwärts mitgenommen wird.
Das Schutzgitter 15, 95 kann bspw. strömungsaufwärts des Meßkörpers 19 oder des Meßelements 23 bspw. in einem Ring integriert sein, der einen Strömungsgleichrichter für das in der Leitung 2 strömende Medium enthält, so daß mit dem Ring der Strömungsgleichrichter und das Schutzgitter gleichzeitig in der Leitung 2 montiert wird, wie es bspw. in der DE 196 52 753 A1 beschrieben ist.

Figur 9 zeigt, wie in einer Kombinationsanordnung 98 ein Schutzgitter 15,95 in einen Gleichrichter 97 integriert ist. Für gleiche oder gleichwirkende Teile werden die gleichen Bezugszeichen wie in den bisherigen Figuren verwendet.
Der Gleichrichter 97 ist dem Fachmann aus der DE 196 47 081 A1 bzw. aus der US-PS 5,918,279 bekannt und soll Teil dieser Offenbarung sein.
Die Figur 9 zeigt einen axialen Querschnitt durch die Kombinationsanordnung 98. In einem bspw. radial gesehen inneren Bereich der Kombinationsanordnung 98 ist das Schutzgitter 15, 95 integriert. Dort verlaufen die Mittellinien 46 unter einem Umlenkwinkel α zur Mittellinie 27 und bilden so das Schutzgitter 15 oder den Turbulator 95. In einem bspw. radial gesehen äußerem Bereich, d.h. in der Nähe der Wandung 3, der Kombinationsanordnung 98 verlaufen die Mittellinien 46 parallel zur Mittellinie 27 und bilden so den Gleichrichter 97. Das Schutzgitter 15, 95 ist in dem Gleichrichter 97 so angeordnet, daß sich ein bspw. vorhandener Rohrkörper 8 oder die Einlaßöffnung 20 oder die Aussparung 99 bzw. das Meßelement 23 strömungsabwärts auf nahezu gleicher Höhe wie das Schutzgitter 15, 95 befindet.

Ein solche Kombination aus Gleichrichter 97 und Schutzgitter 15, 95 kann bspw. durch Kunststoffspritzen hergestellt werden.

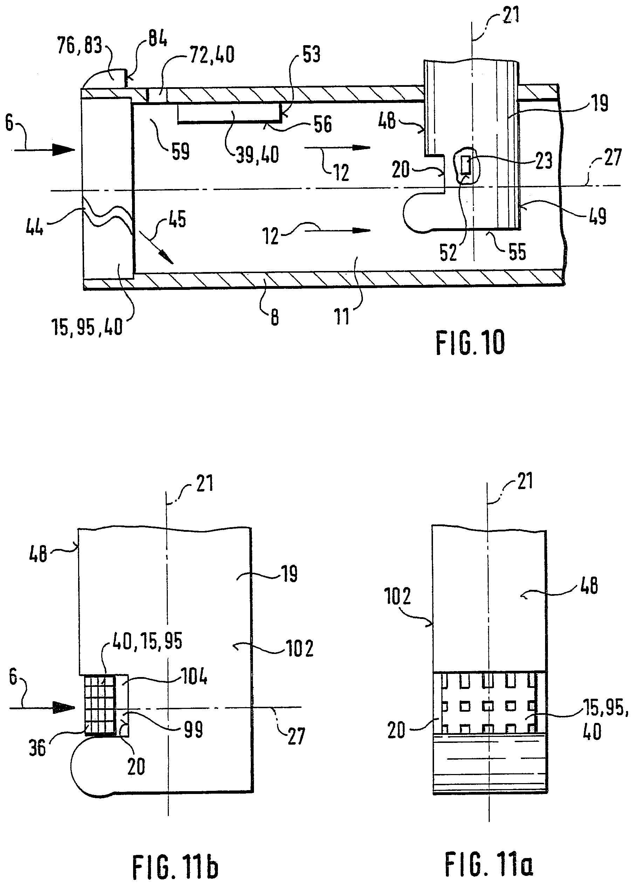

Die Figur 10 zeigt, wie man die Ausführungsbeispiele aus den Figuren 2, 5 und 7 miteinander kombinieren kann. Für gleiche oder gleichwirkende Teile werden die gleichen Bezugszeichen wie in den bisherigen Figuren verwendet.
Als Schutzgitter 15 in dem Rohrkörper 8 wird bspw. ein Turbulator 95 verwendet. Ebenfalls befindet sich bspw. zumindest eine Absaugöffnung 72 in dem Rohrkörper 8 mit einer entsprechenden Erhebung 83. Zumindest eine Längsrippe 39 ist hier bspw. strömungsabwärts nicht direkt hinter dem Schutzgitter 15,95 ausgebildet, sondern erst hinter der Absaugöffnung 72. Die zumindest eine Längsrippe 39 erstreckt sich auch nicht bis zu einer Vorderfläche 48 des Meßkörpers 19.

Die Figuren 11a und 11b zeigen einen Meßkörper 19 mit einem Schutzgitter 15, 95 in Vorder- (Fig. 11a) und Seitenansicht (Fig. 11b). Für gleiche oder gleichwirkende Teile werden die gleichen Bezugszeichen wie in den bisherigen Figuren verwendet. Das Schutzgitter 15, 95 befindet sich in Hauptströmungsrichtung 6 gesehen, anströmseitig in einer Aussparung 99 des Meßkörpers 19 vor der Einlaßöffnung 20. Dabei kann das Schutzgitter 15, 95 anströmseitig bündig mit der Vorderfläche 48 des Meßkörpers abschließen. Dies ist bspw. erforderlich, wenn der Meßkörper 19 bspw. in die Leitung 2 eingesteckt wird.
Abströmseitig muß zwischen dem Schutzgitter 15, 95 und der Einlaßöffnung 20 wenigstens eine bis zu einer Seitenwand 102 des Meßkörpers 19 hin offene Öffnung 104 bleiben, um die Flüssigkeit strömungsabwärts des Schutzgitters 15, 95 an einer Seitenwand 102 des Meßkörpers 19 ableiten zu können.
Die Seitenwand 102 ist eine Seitenfläche des Meßkörpers 19, die zu der Hauptströmungsrichtung 6 nahezu parallel verläuft.
Die Stege 36 des Schutzgitters 15, 95 sollten zu einer Gewährleistung von guten Meßeigenschaften des Meßelements 23 wie geringer Pulsationsfehler und geringes Signalrauschen sowie hohe Reproduzierbarkeit bei gleichzeitig unverändertem Ansprechverhalten folgende geometrischen Abmessungen aufweisen: eine Gitteröffnungsbreite von ≤ 0,1 mm, horizontal zur Hauptströmungsrichtung 6,
eine Gitteröffnungstiefe von ≤ 4 mm, also die Ausdehnung in axialer Richtung entlang der Hauptströmungsrichtung 6,
eine Gitteröffnungshöhe wird an Abmessungen der Aussparung 99 angepaßt,
die Gitteröffnungen 44 sind bspw. um ungefähr 30°, dem Umlenkwinkel α gegenüber der Hauptströmungsrichtung 6 geneigt, Anströmkanten der Stege 36 können gut gerundet oder rechtwinklig sein.

Die Herstellung des Gitters sollte infolge der hohen Anforderungen an die Geometrie der Stege 36, wie z.B. sehr kleine Wandstärken, Konturierung der Stege 36, hohe Maßhaltigkeit, mittels der Mikromechanik, bspw. LIGA- Verfahren, bzw. der Mikrogalvanik erfolgen.

Die Mittel zur Reduzierung der Wirbel, wie Längsrippen, Absaugöffnung, Turbulator können miteinander kombiniert werden.

## Patentansprüche

1. Vorrichtung (1) zur Messung von zumindest einem Parameter, insbesondere eines Luftmassenstroms, eines in einer Leitung (2) strömenden Mediums, insbesondere des Ansaugluftmassenstroms einer Brennkraftmaschine, mit einem in der Leitung (2) angeordneten und von dem strömenden Medium umströmten Messelement (23) und mit zumindest einem zumindest teilweise strömungsaufwärts des Messelementes (23) innerhalb der Leitung (2) angeordneten Schutzgitter (15, 95),
**dadurch gekennzeichnet, dass** das Schutzgitter (15, 95) so ausgebildet ist, dass es das in einer Hauptströmungsrichtung (6) strömende Medium derart umlenkt, dass das Medium strömungsabwärts hinter dem Schutzgitter (15, 95) in einer anderen Richtung (45) verläuft und dadurch im strömenden Medium mitgeführte Schmutzpartikel und Flüssigkeitströpfchen in einen Bereich der Mediumströmung strömungsabwärts hinter dem Schutzgitter (15, 95) und um das Messelement (23) umgelenkt werden.

2. Vorrichtung nach Anspruch 1,
**dadurch gekennzeichnet, daß**
die Vorrichtung (1) innerhalb der Leitung (2) ein Mittel (40) zur Reduzierung von Wirbeln (87) und unkontrollierbarer Flüssigkeitsansammlungen strömungsabwärts des Schutzgitters (15,95) oder in dem Schutzgitter (15,95) hat.

3. Vorrichtung nach Anspruch 1 oder 2,
**dadurch gekennzeichnet, daß**
Gitteröffnungen (44) des Schutzgitters (15,95) Mittellinien (46) haben, die im eingebauten Zustand des Schutzgitters (15,95) gegenüber der Hauptströmungsrichtung (6) geneigt angeordnet ist.

4. Vorrichtung nach Anspruch 1, 2 oder 3,
**dadurch gekennzeichnet, daß**
das Schutzgitter (15,95) gegenüber der Hauptströmungsrichtung (6) geneigt verläuft.

5. Vorrichtung nach Anspruch 1 oder 2,
**dadurch gekennzeichnet,**
**daß** die Leitung (2) einen von dem Medium in Hauptströmungsrichtung (6) durchströmten Rohrkörper (8) mit einem Durchströmkanal (11) hat, und
**daß** das Meßelement (23) sich in dem Rohrkörper (8) befindet.

6. Vorrichtung nach einem oder mehreren der Anspruch 5,
**dadurch gekennzeichnet, daß**
das Schutzgitter (15, 95) unmittelbar vor dem oder innerhalb des Rohrkörpers (8) angeordnet ist.

7. Vorrichtung nach einem oder mehreren der Ansprüche 2 bis 6, **dadurch gekennzeichnet, daß**
als ein Mittel (40) zur Reduzierung von Wirbeln (87) und Flüssigkeitsansammlungen zumindest eine in Hauptströmungsrichtung (6) ausgerichtete Längsrippe (39) in dem Rohrkörper (8) oder in der Leitung (2) angebracht ist.

8. Vorrichtung nach Anspruch 7,
**dadurch gekennzeichnet,**
**daß** durch die Umlenkung des Mediums in der Leitung (2) oder in dem Rohrkörper (8) strömungsabwärts hinter dem Schutzgitter (15, 95) ein abgeschatteter Bereich (59) der Strömung gebildet wird, und
**daß** die zumindest eine Längsrippe (39) vorwiegend in diesem abgeschatteten Bereich (59) angeordnet ist.

9. Vorrichtung nach Anspruch 7 oder 8,
**dadurch gekennzeichnet,**
**daß** die zumindest eine Längsrippe (39) eine Breite hat, daß die Breite eine Ausdehnung der zumindest einen Längsrippen (39) in einer Umfangsrichtung der Leitung ist (2), und
**daß** die Breite der zumindest einen Längsrippe (39) strömungsabwärts größer wird.

10. Vorrichtung nach einem oder mehreren der Ansprüche 7 bis 9,
**dadurch gekennzeichnet, daß**
die zumindest eine Längsrippe (39) in Hauptströmungsrichtung (6) stromlinienförmig ausgebildet ist.

11. Vorrichtung nach einem oder mehreren der Ansprüche 7 bis 10,
**dadurch gekennzeichnet, daß**
die zumindest eine Längsrippe (39) keine geometrischen Unebenheiten aufweist.

12. Vorrichtung nach einem oder mehreren der Ansprüche 7 bis 11,
**dadurch gekennzeichnet,**
**daß** die Leitung (2) oder der Rohrkörper (8) eine Mittellinie (27) hat,
**daß** die Längsrippe (39) eine radiale Rippenmittellinie (63) hat, die senkrecht zur Mittellinie (27) verläuft, und
**daß** die radiale Rippenmittellinie (63) die Mittellinie (27) der Leitung (2) oder des Rohrkörpers (8) schneidet.

13. Vorrichtung nach einem oder mehreren der Ansprüche 7 bis 12,
**dadurch gekennzeichnet, daß**
eine radiale Höhe (58) der zumindest einen Längsrippe (39) sich in Strömungsrichtung (6,12) gesehen vergrößert.

14. Vorrichtung nach einem oder mehreren der Ansprüche 7 bis 13,
**dadurch gekennzeichnet, daß**
eine radiale Höhe (58) der zumindest einen Längsrippe (39) sich in Strömungsrichtung (6,12) verkleinert.

15. Vorrichtung nach einem oder mehreren der Ansprüche 12 bis 14,
**dadurch gekennzeichnet, daß**
eine zu der Mittellinie (27) der Leitung (2) oder des Rohrkörpers (8) parallel verlaufende und ein Ende (56) der radialen Erstreckung der zumindest einen Längsrippe (39) tangierende Linie (57) eine in die Leitung (2) oder den Rohrköper (8) ragende Unterfläche (52) des Meßelements (23) höchstens tangiert.

16. Vorrichtung nach einem oder mehreren der Ansprüche 7 bis 14,
**dadurch gekennzeichnet,**
**daß** sich das Meßelement (23) in einem Meßkörper (19) befindet, und
**daß** eine zu der Mittellinie (27) der Leitung (2) oder des Rohrkörpers (8) parallel verlaufende und ein Ende (56) der radialen Erstreckung der zumindest einen Längsrippe (39) tangierende Linie (57) eine in die Leitung (2) oder den Rohrköper (8) ragende Unterfläche (55) des Meßkörpers (19) höchstens tangiert.

17. Vorrichtung nach Anspruch 15 oder 16,
**dadurch gekennzeichnet,**
**daß** das Meßelement (23) oder der Meßkörper (19) eine Hinterfläche (49) hat, die senkrecht zur Mittellinie (27) verläuft und am weitesten strömungsabwärts liegt, und
**daß** die zumindest eine Längsrippe (39) sich in Hauptströmungsrichtung (6) höchstens bis zu der strömungsabwärts gelegenen Hinterfläche (49) des Meßelements (23) oder des Meßkörpers (19) erstreckt.

18. Vorrichtung nach einem oder mehreren der Ansprüche 12 bis 17,
**dadurch gekennzeichnet, daß**
ein Schnittwinkel (β) von radialen Rippenmittellinien (63) direkt benachbarter Längsrippen (39) gleich groß ist.

19. Vorrichtung nach einem oder mehreren der Ansprüche 7 bis 18,
**dadurch gekennzeichnet, daß**
in Umfangsrichtung der Leitung (2) gesehen ein Abstand zwischen direkt benachbarten Längsrippen (39) gleich groß ist.

20. Vorrichtung nach einem oder mehreren der Ansprüche 5 bis 19,
**dadurch gekennzeichnet, daß**
als ein Mittel (40) zur Reduzierung von Wirbeln (87) und Flüssigkeitsansammlungen in dem Rohrkörper (8) zumindest eine Absaugöffnung (72) in dem Rohrkörper (8) vorhanden ist.

21. Vorrichtung nach Anspruch 20,
**dadurch gekennzeichnet, daß**
die zumindest eine Absaugöffnung (72) sich in einer Wandung des Rohrkörpers (8) befindet und eine Verbindung zwischen dem abgeschatteten Bereich (59) und der Leitung (2) herstellt.

22. Vorrichtung nach Anspruch 20 oder 21,
**dadurch gekennzeichnet, daß**
eine Lage der zumindest einen Absaugöffnung (72) auf dem Rohrkörper (8) von dem Grad der Umlenkung des Mediums strömungsabwärts hinter dem Schutzgitter (15, 95), einem Umlenkwinkel (α), abhängt.

23. Vorrichtung nach einem oder mehreren der Ansprüche 20 bis 22,
**dadurch gekennzeichnet, daß**
strömungsaufwärts im Bereich der Öffnung (72) auf dem Rohrkörper (8) und/oder auf der gegenüberliegenden Seite auf einer Innenwandung (7) der Leitung (2) ein Mittel (76) zur Erhöhung der Strömungsgeschwindigkeit des Mediums angebracht ist.

24. Vorrichtung nach Anspruch 23,
**dadurch gekennzeichnet, daß**
das Mittel (76) zur Erhöhung der Strömungsgeschwindigkeit im Verlauf der Hauptströmungsrichtung (6) einen konvergenten Kanal (79) bildet und der Hauptströmungsrichtung (6) entgegengerichtet gerundet ist.

25. Vorrichtung nach einem oder mehreren der Ansprüche 2 bis 24,
**dadurch gekennzeichnet, daß**
als das Mittel (40) zur Reduzierung von Wirbeln (87) und Flüssigkeitsansammlungen das Schutzgitter (15,95) so ausgebildet ist, daß es das strömende Medium in eine Torsionsbewegung versetzt.

26. Vorrichtung nach Anspruch 25,
**dadurch gekennzeichnet, daß**
die Gitteröffnungen (44) des Schutzgitters (15,95) als das Mittel (40) zur Reduzierung von Wirbeln (87) und Flüssigkeitsansammlungen einen Turbulator (95) bilden.

27. Vorrichtung nach einem oder mehreren der Ansprüche 1 bis 26,
**dadurch gekennzeichnet,**
**daß** sich strömungsaufwärts vor dem Meßelement (23) in der Leitung (2) ein Gleichrichter (97) befindet, und
**daß** das Schutzgitter (15,95) in dem Gleichrichter (97) integriert ist.

28. Vorrichtung nach Anspruch 27,
**dadurch gekennzeichnet,**
**daß** das Meßelement (23) in einem Meßkanal eines Meßkörpers (19) angeordnet ist,
**daß** der Meßkörper (19) eine Einlaßöffnung (20) und eine Auslaßöffnung des Meßkanals hat, und
**daß** das Schutzgitter (15,95) in dem Gleichrichter (97) strömungsaufwärts auf Höhe des Meßelements (23) oder der Einlaßöffnung (20) integriert ist.

29. Vorrichtung nach Anspruch 28,
**dadurch gekennzeichnet,**
**daß** der Meßkörper (19) im Bereich der Einlaßöffnung (20) strömungsaufwärts eine Aussparung (99) hat, und
**daß** das Schutzgitter (15, 95) in der Aussparung (99) eingebracht ist.

30. Vorrichtung nach Anspruch 29,
**dadurch gekennzeichnet,**
**daß** der Meßkörper (19) zumindest zwei Seitenwände (102) hat, die zur Hauptströmungsrichtung (6) nahezu parallel verlaufen, und
**daß** unmittelbar zwischen einem strömungsabwärts gelegenen Ende des Schutzgitters (15,95) und der Seitenwand (102) eine Öffnung (104) vorhanden ist.

31. Vorrichtung nach einem der vorherigen Ansprüche,
**dadurch gekennzeichnet, daß**
das Schutzgitter (15, 95) aus einem Kunststoff hergestellt ist.

32. Vorrichtung nach oder mehreren der Ansprüche 29-31,
**dadurch gekennzeichnet, daß**
das Schutzgitter (15,95) durch ein mikrotechnologische Verfahren hergestellt ist.

33. Vorrichtung nach Anspruch 32, **dadurch gekennzeichnet, dass** das Schutzgitter durch ein LIGA-Verfahren oder Mikrogalvanik hergestellt ist.

## Claims

1. Device (1) for measuring at least one parameter, in particular an air mass flow, of a medium flowing in a pipe (2), in particular the intake-air mass flow of a combustion engine, having a measurement element (23) which is arranged in the pipe (2) and around which the flowing medium flows and having at least one protective grille (15, 95) that is arranged within the pipe (2) at least part way upstream of the measurement element (23),
**characterized in that**
the protective grille (15, 95) is designed such that it deflects the medium flowing in a main flow direction (6) in such a manner that the medium downstream of the protective grille (15, 95) flows in another direction (45) and, as a consequence, dirt particles and liquid drops carried along by the flowing medium are deflected into a region of the medium flow downstream of the protective grille (15, 95) and around the measurement element (23).

2. Device according to Claim 1,
**characterized in that**,
within the pipe (2), the device (1) has a means (40) for reducing vortices (87) and uncontrollable accumulations of liquid downstream of the protective grille (15, 95) or in the protective grille (15, 95).

3. Device according to Claim 1 or 2,
**characterized in that**
grille openings (44) of the protective grille (15, 95) have midlines (46) which, in the installed state of the protective grille (15, 95), is arranged in an inclined manner with respect to the main flow direction (6).

4. Device according to Claim 1, 2 or 3,
**characterized in that**
the protective grille (15, 95) runs in an inclined manner with respect to the main flow direction (6).

5. Device according to Claim 1 or 2,
**characterized in that**
the pipe (2) has a tubular body (8), through which the medium flows in the main flow direction (6), with a through-flow passage (11), and **in that** the measurement element (23) is situated in the tubular body (8).

6. Device according to one or several of Claim 5,
**characterized in that**
the protective grille (15, 95) is arranged immediately in front of or within the tubular body (8).

7. Device according to one or several of Claims 2 to 6,
**characterized in that**,
as a means (40) for reducing vortices (87) and accumulations of liquid, at least one longitudinal rib (39) which is aligned in the main flow direction (6) is affixed in the tubular body (8) or in the pipe (2).

8. Device according to Claim 7,
**characterized in that**,
due to the deflection of the medium in the pipe (2) or in the tubular body (8) downstream of the protective grille (15, 95), a shadowed region (59) of the flow is formed, and **in that** the at least one longitudinal rib (39) is arranged mainly in this shadowed region (59).

9. Device according to Claim 7 or 8,
**characterized in that**
the at least one longitudinal rib (39) has a width, **in that** the width is an extent of the at least one longitudinal ribs (39) in a circumferential direction of the pipe (2), and **in that** the width of the at least one longitudinal rib (39) becomes larger downstream.

10. Device according to one or several of Claims 7 to 9,
**characterized in that**
the at least one longitudinal rib (39) is of streamlined design in the main flow direction (6).

11. Device according to one or several of Claims 7 to 10,
**characterized in that**
the at least one longitudinal rib (39) has no geometric unevenness.

12. Device according to one or several of Claims 7 to 11,
**characterized in that**
the pipe (2) or the tubular body (8) has a midline (27), **in that** the longitudinal rib (39) has a radial rib midline (63) running perpendicularly to the midline (27), and **in that** the radial rib midline (63) intersects the midline (27) of the pipe (2) or of the tubular body (8).

13. Device according to one or several of Claims 7 to 12,
**characterized in that**,
as viewed in the flow direction (6, 12), a radial height (58) of the at least one longitudinal rib (39) increases.

14. Device according to one or several of Claims 7 to 13,
**characterized in that**
a radial height (58) of the at least one longitudinal rib (39) decreases in the flow direction (6, 12).

15. Device according to one or several of Claims 12 to 14,
**characterized in that**
a line (57) running in parallel to the midline (27) of the pipe (2) or of the tubular body (8) and tangential to one end (56) of the radial extent of the at least one longitudinal rib (39) is at most tangential to a lower surface (52), projecting into the pipe (2) or into the tubular body (8), of the measurement element (23).

16. Device according to one or several of Claims 7 to 14,
**characterized in that**
the measurement element (23) is situated in a measurement body (19), and **in that**
a line (57) running in parallel to the midline (27) of the pipe (2) or of the tubular body (8) and tangential to one end (56) of the radial extent of the at least one longitudinal rib (39) is at most tangential to a lower surface (55), projecting into the pipe (2) or into the tubular body (8), of the measurement body (19).

17. Device according to Claim 15 or 16,
**characterized in that**
the measurement element (23) or the measurement body (19) has a rear surface (49) running perpendicularly to the midline (27) and situated furthest downstream, and **in that** the at least one longitudinal rib (39) extends in the main flow direction (6) at most to the downstream rear surface (49) of the measurement element (23) or of the measurement body (19).

18. Device according to one or several of Claims 12 to 17,
**characterized in that**
an intersection angle (β) of radial rib midlines (63) of directly adjacent longitudinal ribs (39) is of equal size.

19. Device according to one or several of Claims 7 to 18,
**characterized in that**,
as viewed in the circumferential direction of the pipe (2), a spacing between directly adjacent longitudinal ribs (39) is of equal size.

20. Device according to one or several of Claims 5 to 19,
**characterized in that**,
as a means (40) for reducing vortices (87) and accumulations of liquid in the tubular body (8), at least one extraction opening (72) is present in the tubular body (8).

21. Device according to Claim 20,
**characterized in that**
the at least one extraction opening (72) is situated in a wall of the tubular body (8) and establishes a connection between the shadowed region (59) and the pipe (2).

22. Device according to Claim 20 or 21,
**characterized in that**
a location of the at least one extraction opening (72) on the tubular body (8) depends on the degree of deflection of the medium downstream of the protective grille (15, 95), i.e. on a deflection angle (α).

23. Device according to one or several of Claims 20 to 22,
**characterized in that**
a means (76) for increasing the flow speed of the medium is affixed upstream in the region of the opening (72) on the tubular body (8) and/or on the opposite side on an inner wall (7) of the pipe (2).

24. Device according to Claim 23,
**characterized in that**
the means (76) for increasing the flow speed forms a convergent channel (79) in the path of the main flow direction (6) and is rounded in the direction opposite to the main flow direction (6).

25. Device according to one or several of Claims 2 to 24,
**characterized in that**,
as the means (40) for reducing vortices (87) and accumulations of liquid, the protective grille (15, 95) is formed in such a manner that it sets the flowing medium in torsional motion.

26. Device according to Claim 25,
**characterized in that**,
as the means (40) for reducing vortices (87) and accumulations of liquid, the grille openings (44) of the protective grille (15, 95) form a turbulator (95).

27. Device according to one or several of Claims 1 to 26,
**characterized in that**
a flow straightener (97) is situated in the pipe (2) upstream of the measurement element (23), and **in that** the protective grille (15, 95) is integrated in the flow straightener (97).

28. Device according to Claim 27,
**characterized in that**
the measurement element (23) is arranged in a measurement passage of a measurement body (19), **in that** the measurement body (19) has an inlet opening (20) and an outlet opening of the measurement passage, and **in that** the protective grille (15, 95) is integrated in the flow straightener (97) upstream at the height of the measurement element (23) or of the inlet opening (20).

29. Device according to Claim 28,
**characterized in that**
the measurement body (19) has a cut-out (99) upstream in the region of the inlet opening (20), and **in that** the protective grille (15, 95) is inserted in the cut-out (99).

30. Device according to Claim 29,
**characterized in that**
the measurement body (19) has at least two side walls (102) which extend approximately parallel with respect to the main flow direction (6), and **in that** an opening (104) is present directly between a downstream end of the protective grille (15, 95) and the side wall (102).

31. Device according to one of the previous claims,
**characterized in that**
the protective grille (15, 95) is produced from a plastic.

32. Device according to one or several of Claims 29-31,
**characterized in that**
the protective grille (15, 95) is produced by a microtechnological process.

33. Device according to Claim 32,
**characterized in that**
the protective grille is produced by a LIGA process or micro-electroplating.

## Revendications

1. Dispositif (1) de mesure d'au moins un paramètre, en particulier d'un débit massique d'air, d'un milieu s'écoulant dans une conduite (2), en particulier du débit massique d'air d'admission d'un moteur à combustion interne, comprenant un élément de mesure (23) disposé dans la conduite (2) et parcouru par le milieu s'écoulant et comprenant au moins une grille de protection (15, 95) disposée à l'intérieur de la conduite (2) au moins en partie en amont de l'élément de mesure (23),
**caractérisé en ce que**
la grille de protection (15, 95) est réalisée de telle sorte qu'elle dévie le milieu s'écoulant dans une direction d'écoulement principale (6) de telle sorte que le milieu s'écoule en aval derrière la grille de protection (15, 95) dans une autre direction (45) et **en ce que** les particules de saleté et les gouttelettes de liquide entraînées dans le milieu s'écoulant sont déviées dans une région de l'écoulement de milieu en aval derrière la grille de protection (15, 95) et autour de l'élément de mesure (23).

2. Dispositif selon la revendication 1,
**caractérisé en ce que**
le dispositif (1) présente, à l'intérieur de la conduite (2), un moyen (40) pour réduire les tourbillons (87) et les accumulations incontrôlables de liquide en aval de la grille de protection (15, 95) ou dans la grille de protection (15, 95).

3. Dispositif selon la revendication 1 ou 2,
**caractérisé en ce que**
des ouvertures de grille (44) de la grille de protection (15, 95) présentent des axes médians (46) qui est disposé de manière inclinée par rapport à la direction d'écoulement principale (6) dans l'état installé de la grille de protection (15, 95).

4. Dispositif selon la revendication 1, 2 ou 3, **caractérisé en ce que** la grille de protection (15, 95) s'étend de manière inclinée par rapport à la direction d'écoulement principale (6).

5. Dispositif selon la revendication 1 ou 2,
**caractérisé en ce que**
la conduite (2) présente un corps tubulaire (8) traversé par le milieu dans la direction d'écoulement principale (6), avec un canal d'écoulement (11) et **en ce que** l'élément de mesure (23) se trouve dans le corps tubulaire (8).

6. Dispositif selon l'une quelconque ou plusieurs de la revendication 5,
**caractérisé en ce que**
la grille de protection (15, 95) est disposée directement avant le corps tubulaire (8) ou à l'intérieur de celui-ci.

7. Dispositif selon l'une quelconque ou plusieurs des revendications 2 à 6,
**caractérisé en ce**
**qu'**au moins une ailette longitudinale (39) orientée dans la direction d'écoulement principale (6) est montée en tant que moyen (40) pour réduire les tourbillons (87) et les accumulations de liquide dans le corps tubulaire (8) ou dans la conduite (2).

8. Dispositif selon la revendication 7,
**caractérisé en ce**
**qu'**une région d'ombre (59) de l'écoulement est formée par la déviation du milieu dans la conduite (2) ou dans le corps tubulaire (8) en aval derrière la grille de protection (15, 95), et
en ce que l'au moins une ailette longitudinale (39) est disposée essentiellement dans cette région d'ombre (59).

9. Dispositif selon la revendication 7 ou 8,
**caractérisé en ce que**
l'au moins une ailette longitudinale (39) présente une largeur,
**en ce que** la largeur est une étendue de l'au moins une ailettes longitudinales (39) dans une direction périphérique de la conduite (2), et
**en ce que** la largeur de l'au moins une ailette longitudinale (39) devient plus grande vers l'aval.

10. Dispositif selon l'une quelconque ou plusieurs des revendications 7 à 9,
**caractérisé en ce que**
l'au moins une ailette longitudinale (39) est réalisée sous forme aérodynamique dans la direction d'écoulement principale (6).

11. Dispositif selon l'une quelconque ou plusieurs des revendications 7 à 10,
**caractérisé en ce que**
l'au moins une ailette longitudinale (39) ne présente pas de défauts d'uniformité géométriques.

12. Dispositif selon l'une quelconque ou plusieurs des revendications 7 à 11,
**caractérisé en ce que**
la conduite (2) ou le corps tubulaire (8) présente un axe médian (27),
**en ce que** l'ailette longitudinale (39) présente un axe médian d'ailette radial (63) qui s'étend perpendiculairement à l'axe médian (27), et
**en ce que** l'axe médian d'ailette radial (63) coupe l'axe médian (27) de la conduite (2) ou du corps tubulaire (8).

13. Dispositif selon l'une quelconque ou plusieurs des revendications 7 à 12,
**caractérisé en ce**
**qu'**une hauteur radiale (58) de l'au moins une ailette longitudinale (39) augmente, vu dans la direction d'écoulement (6, 12).

14. Dispositif selon l'une quelconque ou plusieurs des revendications 7 à 13,
**caractérisé en ce**
**qu'**une hauteur radiale (58) de l'au moins une ailette longitudinale (39) diminue dans la direction d'écoulement (6, 12).

15. Dispositif selon l'une quelconque ou plusieurs des revendications 12 à 14,
**caractérisé en ce que**
qu'une ligne (57) s'étendant parallèlement à l'axe médian (27) de la conduite (2) ou du corps tubulaire (8) et tangente à une extrémité (56) de l'étendue radiale de l'au moins une ailette longitudinale (39) est au plus tangente à une surface inférieure (52) de l'élément de mesure (23) pénétrant dans la conduite (2) ou dans le corps tubulaire (8).

16. Dispositif selon l'une quelconque ou plusieurs des revendications 7 à 14,
**caractérisé en ce que**
l'élément de mesure (23) se trouve dans un corps de mesure (19) et
**en ce qu'**une ligne (57) s'étendant parallèlement à l'axe médian (27) de la conduite (2) ou du corps tubulaire (8) et tangente à une extrémité (56) de l'étendue radiale de l'au moins une ailette longitudinale (39) est au plus tangente à une surface inférieure (55) du corps de mesure (19) pénétrant dans la conduite (2) ou dans le corps tubulaire (8).

17. Dispositif selon la revendication 15 ou 16, **caractérisé en ce que**
l'élément de mesure (23) ou le corps de mesure (19) présente une surface arrière (49) qui s'étend perpendiculairement à l'axe médian (27) et qui est situé le plus loin en aval, et
**en ce que** l'au moins une ailette longitudinale (39) s'étend dans la direction d'écoulement principale (6) au plus jusqu'à la surface arrière (49) située en aval de l'élément de mesure (23) ou du corps de mesure (19).

18. Dispositif selon l'une quelconque ou plusieurs des revendications 12 à 17,
**caractérisé en ce**
**qu'**un angle de coupe (β) d'axes médians d'ailettes radiaux (63) d'ailettes longitudinales (39) directement adjacentes est identique.

19. Dispositif selon l'une quelconque ou plusieurs des revendications 7 à 18,
**caractérisé en ce que**
vu dans la direction périphérique de la conduite (2), une distance entre des ailettes longitudinales directement adjacentes (39) est identique.

20. Dispositif selon l'une quelconque ou plusieurs des revendications 5 à 19,
**caractérisé en ce**
**qu'**au moins une ouverture d'aspiration (72) est prévue dans le corps tubulaire (8) en tant que moyen (40) pour réduire les tourbillons (87) et les accumulations de liquide dans le corps tubulaire (8).

21. Dispositif selon la revendication 20,
**caractérisé en ce que**
l'au moins une ouverture d'aspiration (72) se trouve dans une paroi du corps tubulaire (8) et constitue une connexion entre la région d'ombre (59) et la conduite (2).

22. Dispositif selon la revendication 20 ou 21,
**caractérisé en ce**
**qu'**une position de l'au moins une ouverture d'aspiration (72) sur le corps tubulaire (8) dépend du degré de déviation du milieu en aval derrière la grille de protection (15, 95), d'un angle de déviation (α).

23. Dispositif selon l'une quelconque ou plusieurs des revendications 20 à 22,
**caractérisé en ce**
**qu'**en amont dans la région de l'ouverture (72) sur le corps tubulaire (8) et/ou sur le côté opposé sur une paroi interne (7) de la conduite (2) est disposé un moyen (76) pour augmenter la vitesse d'écoulement du milieu.

24. Dispositif selon la revendication 23,
**caractérisé en ce que**
le moyen (76) pour augmenter la vitesse d'écoulement forme un canal convergent (79) dans l'étendue de la direction d'écoulement principale (6) et est arrondi dans le sens opposé à la direction d'écoulement principale (6).

25. Dispositif selon l'une quelconque ou plusieurs des revendications 2 à 24,
**caractérisé en ce que**
la grille de protection (15, 95) est réalisée en tant que moyen (40) pour réduire les tourbillons (87) et les accumulations de liquide, de telle sorte qu'elle confère au milieu s'écoulant un mouvement de torsion.

26. Dispositif selon la revendication 25,
**caractérisé en ce que**
les ouvertures de grille (44) de la grille de protection (15, 95) forment un turbulateur (95) en tant que moyen (40) pour réduire des tourbillons (87) et des accumulations de liquide.

27. Dispositif selon l'une quelconque ou plusieurs des revendications 1 à 26,
**caractérisé en ce**
**qu'**en amont avant l'élément de mesure (23) dans la conduite (2) se trouve un redresseur (97) et en ce que la grille de protection (15, 95) est intégrée dans le redresseur (97).

28. Dispositif selon la revendication 27,
**caractérisé en ce que**
l'élément de mesure (23) est disposé dans un canal de mesure d'un corps de mesure (19),
**en ce que** le corps de mesure (19) présente une ouverture d'entrée (20) et une ouverture de sortie du canal de mesure, et
**en ce que** la grille de protection (15, 95) est intégrée dans le redresseur (97) en amont à la hauteur de l'élément de mesure (23) ou à la hauteur de l'ouverture d'entrée (20).

29. Dispositif selon la revendication 28,
**caractérisé en ce que**
le corps de mesure (19) présente en amont, dans la région de l'ouverture d'entrée (20), un évidement (99) et **en ce que** la grille de protection (15, 95) est introduite dans l'évidement (99).

30. Dispositif selon la revendication 29,
**caractérisé en ce que**
le corps de mesure (19) présente au moins deux parois latérales (102) qui s'étendent presque parallèlement à la direction d'écoulement principale (6) et
**en ce que** directement entre une extrémité de la grille de protection (15, 95) située en aval et la paroi latérale (102) est prévue une ouverture (104).

31. Dispositif selon l'une quelconque des revendications précédentes,
**caractérisé en ce que**
la grille de protection (15, 95) est fabriquée en matière plastique.

32. Dispositif selon l'une quelconque ou plusieurs des revendications 29 à 31,
**caractérisé en ce que**
la grille de protection (15, 95) est fabriquée par un procédé microtechnique.

33. Dispositif selon la revendication 32, **caractérisé en ce que** la grille de protection est fabriquée par un procédé LIGA ou par un procédé de fabrication microgalvanique.
